# EUROPEAN PATENT APPLICATION

(11) **EP 3 202 601 A1**
(43) Date of publication of application: **09.08.2017**
(21) Application number: 16160842.7
(22) Date of filing: 17.03.2016
(51) Int. Cl.: B60C 29/04, B60C 29/06, F04B 33/00, F16L 37/107, F16L 37/248, F16L 37/252

(54) **PNEUMATIC VALVE ADAPTOR**

(30) Priority: 04.02.2016 TW 105103874
(71) Applicant: Shieun TA Industry Co., Ltd., Taoyuan City 325 (TW)
(72) Inventor: CHENG, WEI-YUN, 325 Taoyuan City (TW)
(74) Representative: Wittmann, Günther

(57) **Abstract**

A pneumatic valve adaptor includes a fast-releasable gas source connector, which includes a top source piece and a rotatable joint, the and at least one valve coupler. The top source piece is connected to a top end of the rotatable joint for receiving and feeding gas supplied from a gas source into the rotatable joint. The rotatable joint has a lower edge in which at least one first engagement section is formed. The valve coupler is provided, at a lateral external surface and a lower end, with at least a second engagement section and a valve connection section. The second engagement section is engageable with or disengage able from the first engagement section through rotation of the rotatable joint. The valve connection section is connectable to a pneumatic valve of an inflatable object for supplying and feeding the gas from the gas source into the inflatable object for inflation.

## Description

### BACKGROUND OF THE INVENTION

### 1. Field of the Invention

The present invention relates to a pneumatic valve adaptor, and in particular to a leakage-resistant pneumatic valve adaptor that is applicable to supplying gaseous or liquid tire sealant and comprises a fast-releasable gas source connector that can be quickly connected to or disconnected from a valve coupler through a rotating movement.

### 2. The Related Arts

Known pneumatic valves used in bicycles are generally classified as French valves (or Presta valve or Sclaverand valve) and American valves (or Schrader valve), which comprises a valve stem, this being a publicly known tire valve. An adaptor or chuck for the tire valve is generally classified in two models, one being rubber clamping type, which uses compression of rubber to clamp the valve and thus achieving coupling or connection, but is not suitable for high-pressure tires, such as tires for road bikes or racing bikes, which requires high pressure filled therein, because the rubber clamping type chuck provides no sufficient clamping force and cause undesired detachment; the second one being screw rotating type, which uses male and female threads to connect with each other through rotation and is suitable for high pressure tires and is the most commonly used tire valve parts, but the process of screwing or rotation is a slow one, making it not possible to immediately connect to or separate or detach from a tire valve so that leakage of air or gas may occur in the valve stem at the time when a push pin unit of the screw rotating type adaptor is in contact with the valve stem but has not been completely tightened or at the time when the push pin unit is still in contact with the valve stem but has not been completely released or separated.

Further, in a valve adaptor of the screw rotating type, the leakage issue may be compensated by setting an actual inflating pressure to be higher level in order to overcome the problem of gas leakage. However, this would make it not possible for a user to precisely control the pressure filled in the tire. If the gas filled in a tire is pressurized air, there would be no harm to human bodies in any event of leakage. However, when such a valve adaptor of the screw rotating type is used to fill or supply a gaseous or liquid tire sealant, leakage, once occurring, would make it not possible for the high pressure gas or liquid of the tire sealant to be completely filled into a punctured tire and in addition, it is quite possible for the chemicals of the tire sealant to leak out during mounting or dismounting of the valve adaptor so that besides incomplete filling of the tire sealant into the tire, the chemicals of the tire sealant, which may be highly polluting, may get attached to an outside surface of the tire or the hands or clothing of the operator, leading to inhalation of the chemicals of the tire sealant through mount and nose of the operator, or the chemicals may get splashed to for example the eyes of the operator, causing serous damage to the health and safety of the operator.

Patent documents of this field are known. Examples include Taiwan Utility Model M505397, which discloses a pneumatic tire repairing device, and Chinese Patent No. CN204095150, which discloses a tire repairing liquid canister, where a conventional structure of a tire sealant filling valve, similar to what discussed above, is disclosed, in which during a process of connecting or disconnecting a nozzle (41) or a valve (21) of a second connection section (2) to or from a tire valve (4) that is of an American valve configuration, a similar issue that a push pin of the tire valve (4) of an American valve configuration cannot be immediately return to close the valve (4) exists, leading to the problem that the tire sealant may get leaking from the nozzle (41) or the valve (21) of the second connection section (2) or the tire valve (4).

Further, US Patent No. 7,028,720 discloses a sealing device, in which a tire repairing canister has a connector in the form of a socket nut (56) for connection with a tire valve. The device suffers the same problem that tire sealant may get leaking from the connector in the form of a socket nut (56) or the tire valve when the device is connected to or disconnected from an American valve.

In addition, Taiwan Patent Publication No. 1490132 discloses a connector structure of a connection hose for a vehicle-carrying air compressor, in which a safety mechanism is provided to a second connection head (5) that has a very complicated structure for preventing abrupt ejection of chemicals of a tire sealant resulting from an incorrect operation conducted by an operator from. However, components involved are quite complicated and the number is large, making it ready to get malfunctioning and losing normal functionality thereof. Further, a threaded hole (61) is provided in the second connection head (51) for screwing to a tire valve (9) of an automobile tire (99) such that when an external terminal (71) of a valve stem (7) is contacted by a pin (90) of the tire valve (9), the chemicals of the tire sealant are allowed to be filled into the tire for repairing the tire. As described in the disclosure of the Taiwan Patent, the threaded hole (61) and the tire valve (9) of the automobile tire (99) need to be screwed together or to disengaged from each other through a long process. Thus, the external terminal (71) of the valve stem (7) that is in contact with the tire valve (9) of the automobile tire (99) does not get separated therefrom or reach complete depressing contact therewith in a very short period of time so that there is still the same problem of the chemicals of the tire sealant getting leaking from the threaded hole (61) and the tire valve (9) of the automobile tire (99).

### SUMMARY OF THE INVENTION

In view of the above, the primary object of the present invention is to provide a pneumatic valve adaptor, particularly one that comprises a fast-releasable gas source connector that is connectable to a gas source and at least one valve coupler that is connectable to a pneumatic valve of an inflatable object, such as a tire, wherein through rotation of the fast-releasable gas source connector in either clockwise or counterclockwise direction, fast coupling engagement or disengagement and thus separation between the fast-releasable gas source connector and the valve coupler can be achieved to ensure that when the gas source is operated for repairing or sealing a puncture of the inflatable object, such as a tire, with a tire sealant, the tire sealant does not leak from the valve coupler or the pneumatic valve of the inflatable object of the tire and also to ensure such an effect can be achieved whether the pneumatic valve of the inflatable object is an American valve or a French valve, whereby the problems and drawbacks that a conventional helical sealant charging nozzle may cause leakage of the gas or chemicals of the tire sealant during an operation of repairing or puncture-sealing of a tire.

To achieve the above object, the present invention provides a pneumatic valve adaptor, which comprises: a fast-releasable gas source connector, which comprises a top source piece and a rotatable joint, wherein the top source piece is connected to a top end of the rotatable joint and is connectable with an external fluid source for feeding fluid from the fluid source into the rotatable joint and the rotatable joint has a lower edge in which at least one first engagement section is formed; and

at least one valve coupler, which has a lateral external surface and a lower end that are respectively provided with at least one second engagement section and a valve connection section, wherein the second engagement section and the first engagement section correspond to each other and are connectable with and disengageable from each other through rotation of the rotatable joint, and the valve connection section is connectable with a pneumatic valve of an inflatable object for supplying the fluid from the fluid source into and inflating the inflatable object, and the rotatable joint is selectively rotatable in a reversed direction to efficiently separating the fast-releasable gas source connector from the valve coupler.

Further, in the above pneumatic valve adaptor of the present invention, the top source piece of the fast-releasable gas source connector has a top end that forms a gas inlet opening for connection with a supply tube connector of the fluid source that supplies a tire sealant so as to receive the supply of the fluid of the tire sealant.

In the above pneumatic valve adaptor of the present invention, the top source piece of the fast-releasable gas source connector has a lower end in which at least two through holes are formed and in communication with the gas inlet opening formed in the top end of the top source piece.

In the above pneumatic valve adaptor of the present invention, the top source piece of the fast-releasable gas source connector has a lower end to which a push pin is mounted.

In the above pneumatic valve adaptor of the present invention, the rotatable joint of the fast-releasable gas source connector has a top end in which a receiving recess is formed for receiving a lower end of the top source piece to fit therein and connect therewith.

In the above pneumatic valve adaptor of the present invention, the rotatable joint of the fast-releasable gas source connector has a top end in which a receiving recess is formed for receiving at least one seal ring to dispose therein.

In the above pneumatic valve adaptor of the present invention, the top source piece of the fast-releasable gas source connector has a lower circumference along which a guide slope surface is formed.

In the above pneumatic valve adaptor of the present invention, the first engagement section of the rotatable joint of the fast-releasable gas source connector comprises an L-shaped slot and the second engagement section of the valve coupler comprises a raised block that is receivable in and movable along the L-shaped slot.

In the above pneumatic valve adaptor of the present invention, the valve connection section of the valve coupler first engagement section of the rotatable joint of the fast-releasable gas source connector comprises an L-shaped slot and the second engagement section of the valve coupler comprises a raised block that is receivable in and movable along the L-shaped slot.

In the above pneumatic valve adaptor of the present invention, the valve connection section of the valve coupler comprises internal threading corresponding to and engageable with an external thread of a French valve and the pneumatic valve of the inflatable object to which the valve connection section is connectable is a French valve.

In the above pneumatic valve adaptor of the present invention, the valve connection section of the valve coupler comprises an internal thread that corresponds to an external thread of an American valve, the internal thread being connectable with an extender, which comprises an internal locking thread formed therein, the internal locking thread corresponding to and engageable with an external thread of a French valve.

The efficacy of the pneumatic valve adaptor according to the present invention is that an operation between the first engagement section of the rotatable joint of the fast-releasable gas source connector and the second engagement section of the valve coupler is conducted such that through rotation of the rotatable joint of the fast-releasable gas source connector in either clockwise or counterclockwise direction, which achieves a short distance movement, coupling engagement or disengagement and separation between the rotatable joint and the valve coupler can be accomplished in an efficient manner so that the valve coupler, when connected to a pneumatic valve, either an American valve or a French valve, which is mounted to an inflatable object, allows for efficient coupling engagement or disengagement and separation of the fast-releasable gas source connector and also eliminate the problem that gaseous or liquid tire sealant gets leaking or splashing during an operation of using a gas source to supply and fill the tire sealant to a tire for inflation or repairing of a tire and during a process of dismounting the adaptor from the tire. Particularly, when used with a pneumatic valve of an inflatable object, which is an American valve, a push pin provided at a lower side of the top source piece of the fast-releasable gas source connector is allowed to get into complete depressing contact with a contact pin of the pneumatic valve or to efficiently detach from the contact pin of the pneumatic valve so as to ensure health and safety of an operator and to completely eliminate the problems associated with a highly polluting or high invasive tire sealant gas during an operation of filling the chemical to a tire.

### BRIEF DESCRIPTION OF THE DRAWINGS

The present invention will be apparent to those skilled in the art by reading the following description of preferred embodiments thereof, with reference to the attached drawings, wherein:
FIG. 1 is a perspective view showing a pneumatic valve adaptor according to a first embodiment of the present invention;
FIG. 2 is an exploded view of FIG. 1;
FIG. 3 is perspective view illustrating a first application of the pneumatic valve adaptor according to the present invention;
FIG. 4 is a cross-sectional view, in an exploded form, illustrating an operation of the first application of FIG. 3;
FIG. 5 is a cross-sectional view, similar to FIG. 4 but partly exploded, illustrating a valve coupler of the pneumatic valve adaptor according to the present invention screwed to a pneumatic valve of an inflatable object;
FIG. 6 is a cross-sectional view, similar to FIG. 5, illustrating a condition where a fast-releasable gas source connector is rotated to connect with the valve coupler of the pneumatic valve adaptor according to the present invention;
FIG. 7 is a perspective view showing a pneumatic valve adaptor according to a second embodiment of the present invention;
FIG. 8 is an exploded view of FIG. 7;
FIG. 9 is perspective view illustrating a second application of the pneumatic valve adaptor according to the present invention;
FIG. 10 is a cross-sectional view illustrating a condition where a fast-releasable gas source connector of the pneumatic valve adaptor of FIG. 9 is rotated to connect with the valve coupler and the valve coupler is screwed to a pneumatic valve of an inflatable object;
FIG. 11 is a perspective view showing a pneumatic valve adaptor according to a third embodiment of the present invention;
FIG. 12 is an exploded view of FIG. 11;
FIG. 13 is perspective view illustrating a third application of the pneumatic valve adaptor according to the present invention; and
FIG. 14 is a cross-sectional view illustrating a condition where a fast-releasable gas source connector of the pneumatic valve adaptor of FIG. 13 is rotated to connect with the valve coupler and the valve coupler is screwed to a pneumatic valve of an inflatable object.

### DETAILED DESCRIPTION OF THE PREFERRED EMBODIMENTS

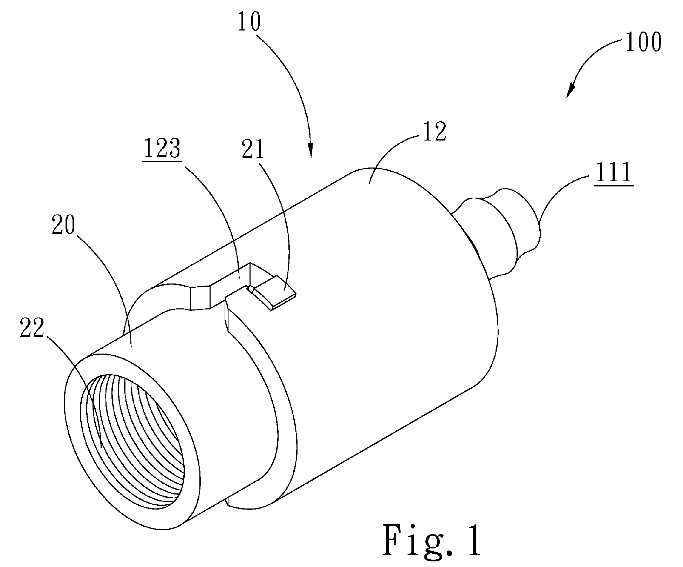

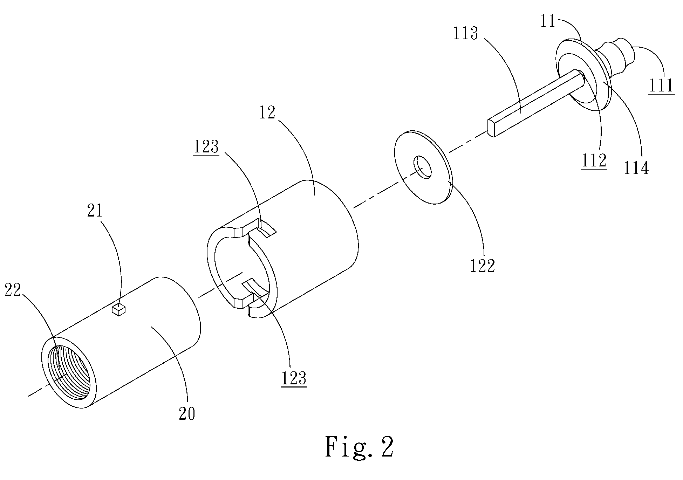

Referring to FIGS. 1 and 2, a pneumatic valve adaptor constructed according to a first embodiment of the present invention is shown, generally designated at 100. The pneumatic valve adaptor 100 comprises a fast-releasable gas source connector 10. The fast-releasable gas source connector 10 comprises a top source piece 11 and a rotatable joint 12. The top source piece 11 has a top end that forms a gas inlet opening 111. The top source piece 11 has a lower end in which two through holes 112 and a push pin 113 are formed. The through holes 112 are in communication with the gas inlet opening 111. The top source piece 11 has a lower circumference along which a guide slope surface 114 is formed.

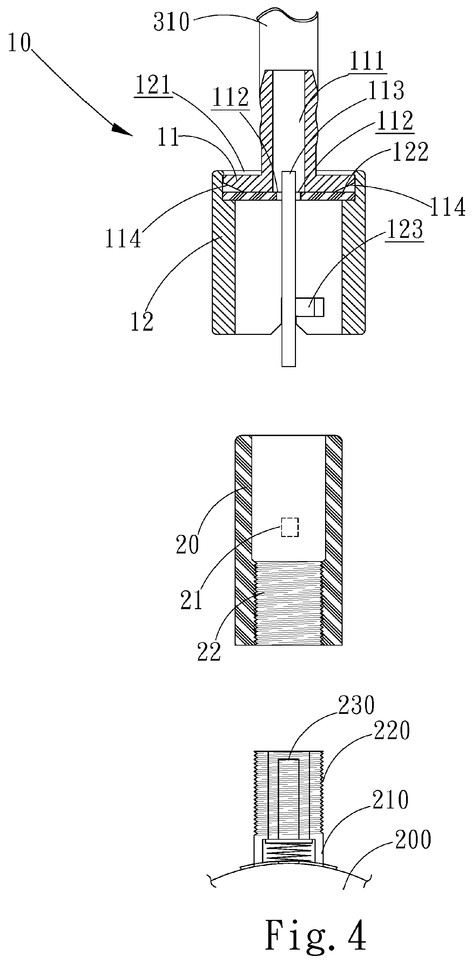

The rotatable joint 12 has a top end in which a receiving recess 121 (see FIG. 4) is formed. The receiving recess 121 receives at least one seal ring 122 disposed therein. The lower end of the top source piece 11 is tightly fit into the receiving recess 121 for connection therewith, in such a way that a lower end of the push pin 113 of the top source piece 11 extends through the receiving recess 121 and the seal ring 122 into the rotatable joint 12. The rotatable joint 12 has a lower edge in which at least one first engagement section 123 is formed. The first engagement section 123 is not limited to any specific form and, in the present invention, an L-shaped fitting slot is taken as an example for achieving bayonet type connection.

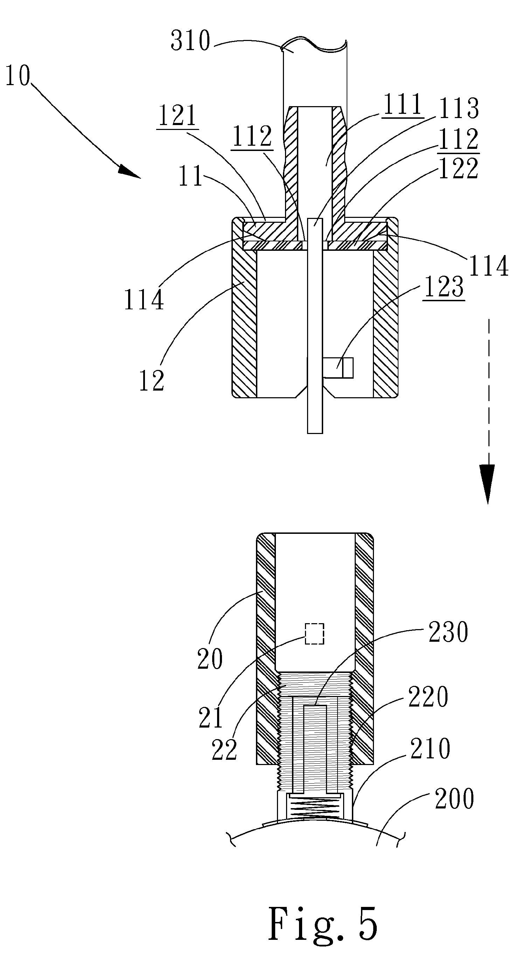

At least one valve coupler 20 has a lateral external surface and a lower end that are respectively provided with at least one second engagement section 21 and a valve connection section 22. The second engagement section 21 is not limited to any specific form and, in the present invention, a raised block is taken as an example, where the block of the second engagement section 21 and L-shaped slot of the first engagement section 123 of the rotatable joint 12 of the fast-releasable gas source connector 10 may engage with/disengage from each other through rotation of the rotatable joint 12 in a clockwise direction or a counterclockwise direction. The rotatable joint 12 may have a rotation stroke that is determined by the size or dimension of the first engagement section 123. In the present invention, a short rotation stroke that provides a circumferential movement covering a small circular angle for the raised block is preferred so that the engagement and/or disengagement between the first engagement section 123 and the second engagement section 21 for coupling and/or separation can be accomplished in a more efficient manner. The valve connection section 22 is engageable with and thus connectable to a pneumatic valve 210 of an inflatable object 200 (as shown in FIG. 5). In a first application of the first embodiment of the present invention, an American valve is taken as an example for the pneumatic valve of the inflatable object and the valve connection section 22 is structured, in the form of internal threading, to correspond to an external thread 220 of the pneumatic valve 210 of the inflatable object 200, which is an American valve in the example, whereby the valve coupler 20 may be screwed and fixed to the pneumatic valve 210 of the inflatable object 200 by means of the valve connection section 22.

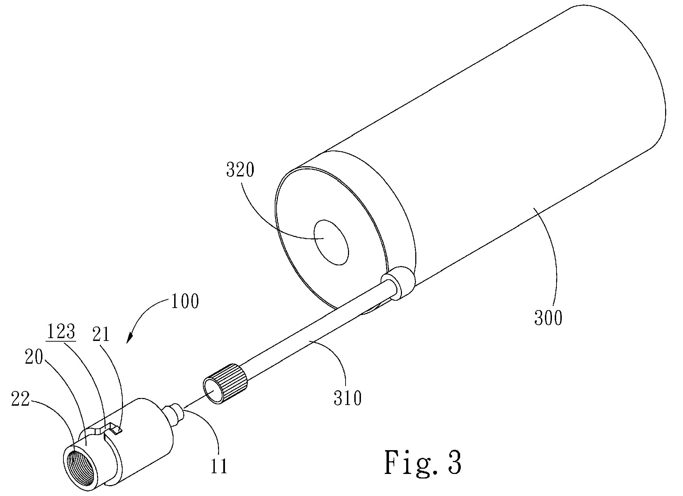

Referring to FIGS. 3, 4, 5, and 6, the first application of the pneumatic valve adaptor 100 according to the present invention and an operation thereof are illustrated, wherein the gas inlet opening 111 of the top source piece 11 of the fast-releasable gas source connector 10 is connectable to a supply tube 310 of a gas source 300 (as shown in FIG. 3), and the gas source 300 is allowed to discharge and supply gas through pushing of a push button 320 provided at a top thereof. The gas source 300 is not limited to any specific form and, in the present invention, a gas-charging type tire sealant that is generally used for repairing a puncture of a tire is taken as an example for illustration.

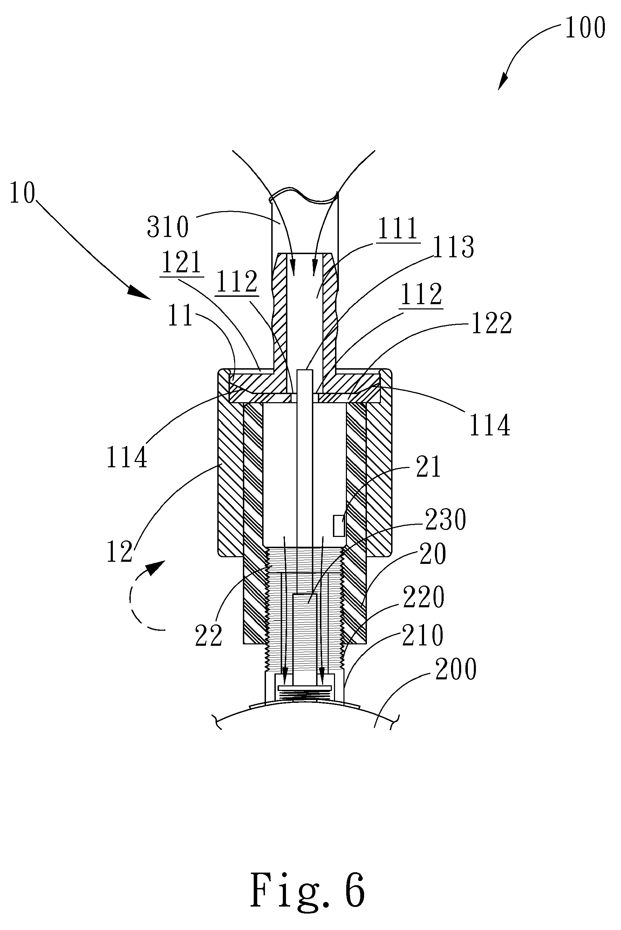

The valve connection section 22 of the valve coupler 20 is then screwed to the external thread 220 of the pneumatic valve 210 of the inflatable object 200 that is, in the example, an American valve (as shown in FIG. 5). The rotatable joint 12 of the fast-releasable gas source connector 10 is then fit downward to the outside of the valve coupler 20 (as illustrated by the arrow of FIG. 5), in such a way that the first engagement section 123 of the rotatable joint 12 and the second engagement section 21 of the valve coupler 20 are first mated to each other, through proper alignment and reception therebetween, and a short stroke of rotation that passes over a small circular angle is applied to the rotatable joint 12 (as illustrated by the arrow of FIG. 6), so that the first engagement section 123 and the second engagement section 21 are set in mutual engagement with each other and a bottom surface of the seal ring 122 is set in tight contact engagement with a top end of the valve coupler 20 to cause a circumferential edge of the seal ring 122 that is received in the receiving recess 121 of the rotatable joint 12 to undergo compression and thus deformation for tight engagement with the guide slope surface 114 on the underside of the top source piece 11 of the fast-releasable gas source connector 10 (as shown in FIG. 6), thereby forming an arrangement of gas-tight engagement. Further, the push pin 113 that extends to the lower side of the top source piece 11 of the fast-releasable gas source connector 10 may push down a contact pin 230 arranged in the pneumatic valve 210 of the inflatable object 200, which in the example is an American valve, so as to open the pneumatic valve 210 thereby allowing the gaseous tire sealant supplied from the gas source 300 to flow through the supply tube 310, the gas inlet opening 111, the through holes 112, the receiving recess 121, and the seal ring 122 and get into the interior of the valve coupler 20 for subsequently feeding through the pneumatic valve 210 into the inflatable object 200, which can be, in the example, a tire.

After the gaseous tire sealant is fed from the gas source 300 into the inflatable object 200, which in the example is a tire, the push button 320 of the gas source 300 may be released to cut off the supply of the gaseous tire sealant. An operation carried out in a reversed sequence of the above-described operation with reference to FIGS. 4, 5, and 6 may be applied to rotate the rotatable joint 12 of the fast-releasable gas source connector 10 in a reversed direction so as to have the first engagement section 123 of the rotatable joint 12 and the second engagement section 21 of the valve coupler 20 disengaging from and the separated from each other, allowing the rotatable joint 12 pulled upward for fast detaching the push pin 113 of the top source piece 11 of the fast-releasable gas source connector 10 from the contact pin 230 of the pneumatic valve 210 of the inflatable object 200, whereby the pneumatic valve 210 is closed immediately and no leakage or splashing of the gas or liquid of the tire sealant resulting from incomplete or poor closure of the pneumatic valve 210 may occur.

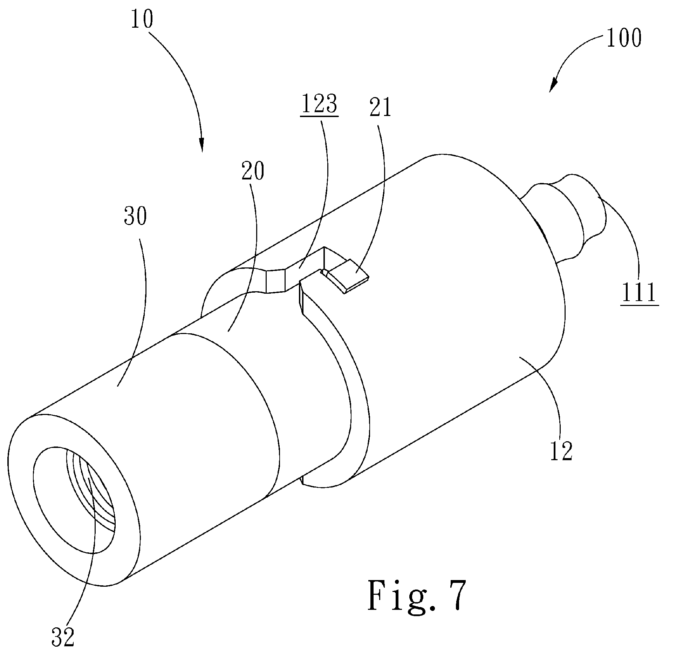

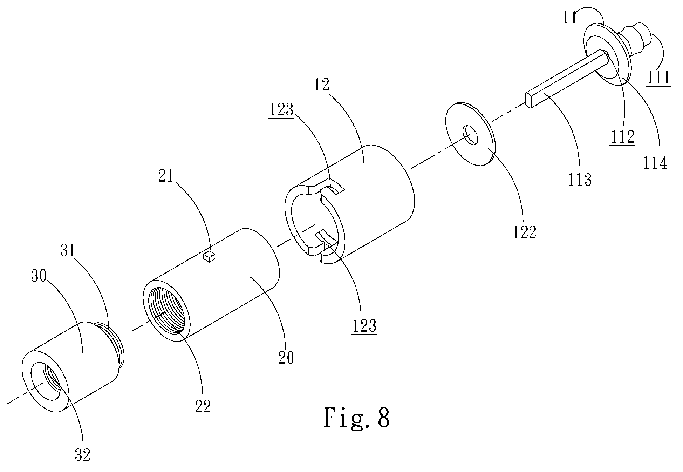

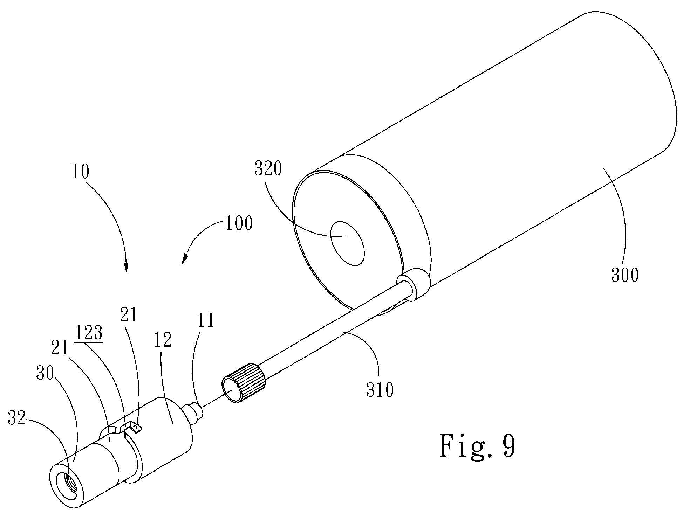

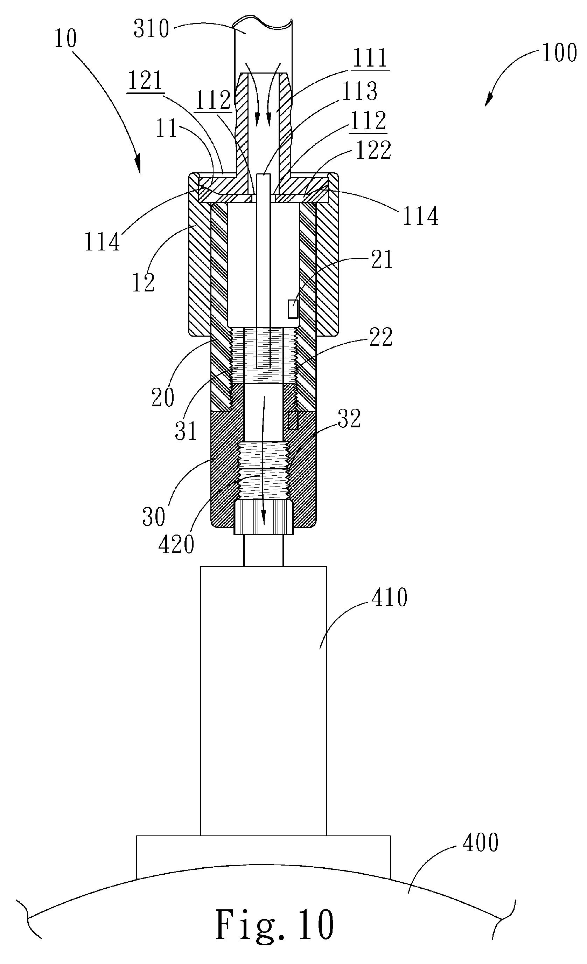

Referring to FIGS. 7, 8, 9, and 10, a pneumatic valve adaptor according to a second embodiment of the present invention, also designated at 100, and a second application thereof are illustrated, wherein an extender 30 has a top end and a lower end that are respectively provided with a connection section 31 and an internal locking thread 32. The connection section 31 is engageable with the valve connection section 22 of the valve coupler 20 that are shown in for example FIGS. 1-6. The connection section 31 is not limited to any specific form and, in the present invention, an externally threaded hollow pillar is taken as an example, and the internal locking thread 32 is structured as internal threading corresponding to an external thread 420 of a pneumatic valve 410 that in the example is a French valve mounted to an inflatable object 400, whereby the extender 30 can be adapted to and connectable with the French valve configuration of the pneumatic valve 410 of the inflatable object 400. With such connection being accomplished as described, a subsequent operation that follows that described with reference to FIGS. 4, 5, and 6 (in such a sequence) can be taken to have the first engagement section 123 of the rotatable joint 12 and the second engagement section 21 of the valve coupler 20 aligned with and mating each other, followed by rotation, either clockwise or counterclockwise, of the rotatable joint 12 to have the rotatable joint 12 and the valve coupler 20 mounted to the extender 30 (as shown in FIG. 10) or detached from each other. In this way, gas or liquid may be fed from the gas source 300, through the French valve configuration of the pneumatic valve 410, into the inflatable object 400 and leakage or splashing of the gas or liquid tire sealant can be prevented. In the second embodiment and the second application, according to the pneumatic valve 210 of the inflatable object 200 that is an American valve or the pneumatic valve 410 of the inflatable object 400 that is a French valve being involved, a user may use the valve coupler 20 to screw to the American valve configuration of the pneumatic valve 210 or uses an extender 30 to connect with the valve coupler 20 and then uses the extender 30 to screw to the French valve configuration of the pneumatic valve 410.

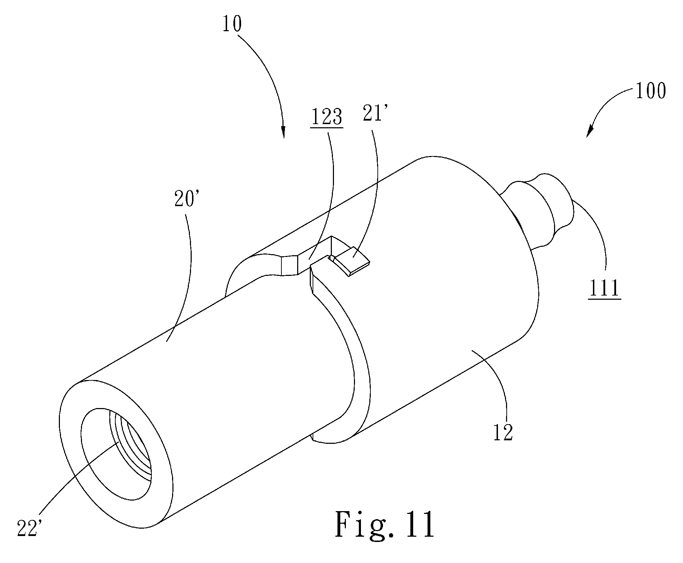

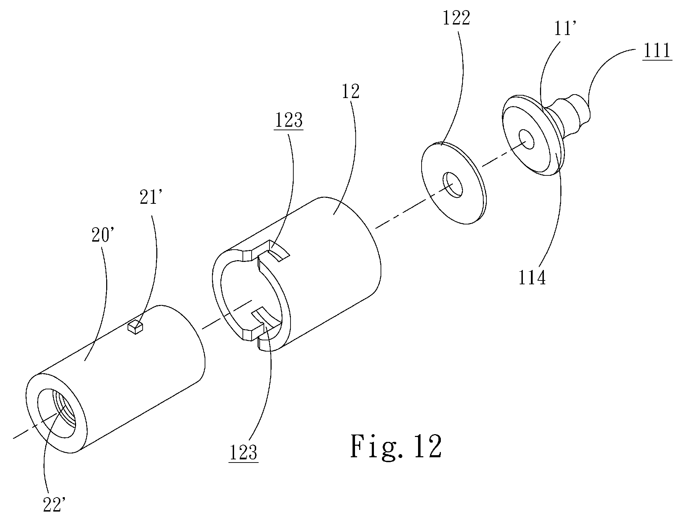

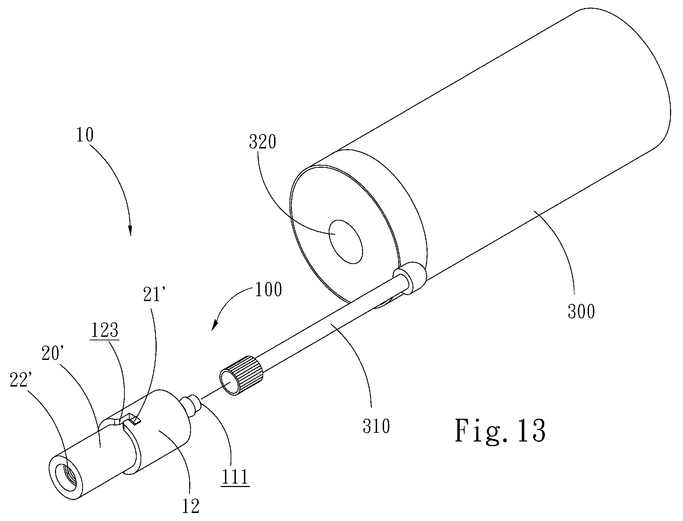

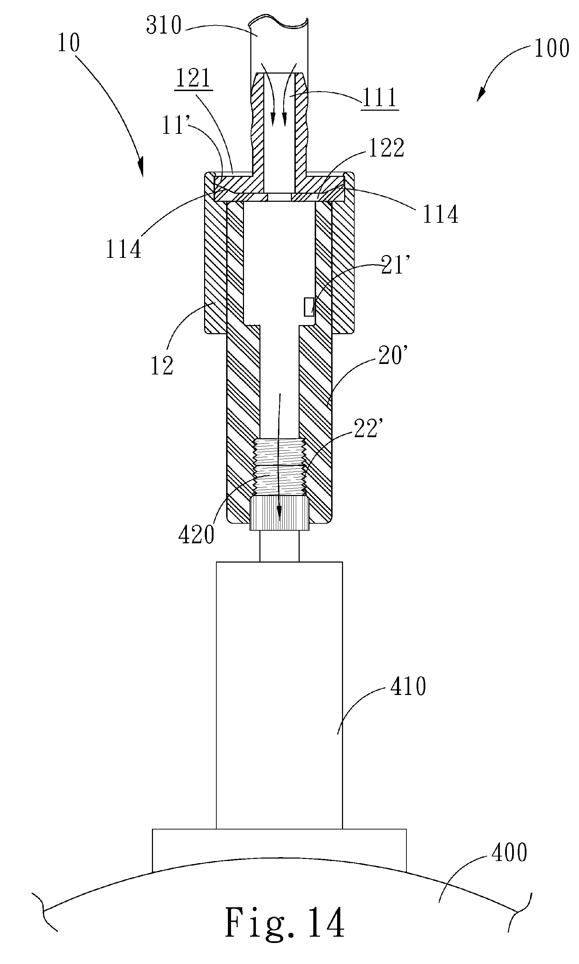

Referring to FIGS. 11, 12, 13, and 14, a pneumatic valve adaptor according to a third embodiment of the present invention, also designated at 100, and a third application thereof are illustrated, wherein the valve connection section 22' of the valve coupler 20' is structured as internal threading corresponding to and engageable with the external thread 420 of the pneumatic valve 410 of the inflatable object 400, which is in the form of a French valve, so as to allow for direct screwing and connection of the valve connection section 22' of the valve coupler 20' to the French valve configuration of the pneumatic valve 410 of the inflatable object 400. In the third embodiment and the third application, due to the pneumatic valve 410 of the inflatable object 400 being not necessary to be pushed down by the push pin 113, the top source piece 11' is provided with no the push pin 113 at the lower side thereof. An operation, which is carried out following the sequence of FIGS. 4, 5, 6 and described above, may be taken to first have the first engagement section 123 of the rotatable joint 12 aligned with and mating the second engagement section 21' of the valve coupler 20', followed by rotation, either clockwise or counterclockwise, of the rotatable joint 12 to have the rotatable joint 12 and the valve coupler 20' connected to each other (as shown in FIG. 14) or detached from each other. In this way, gas or liquid may be fed from the gas source 300, through the French valve configuration of the pneumatic valve 410, into the inflatable object 400 and leakage or splashing of the gas or liquid tire sealant can be prevented, similar to what illustrated in FIGS. 1-10. In the third embodiment and the third application, a user is allowed to fill gaseous or liquid tire sealant into an inflatable object 400 through the French valve configuration of a pneumatic valve 410 mounted to the inflatable object 400.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A pneumatic valve adaptor, comprising: a fast-releasable gas source connector, which comprises:
a top source piece and a rotatable joint, the top source piece being connected to a top end of the rotatable joint and adapted to connect with an external fluid source for feeding fluid from the fluid source into the rotatable joint, the rotatable joint having a lower edge in which at least one first engagement section is formed; and
at least one valve coupler, which has a lateral external surface and a lower end that are respectively provided with at least one second engagement section and a valve connection section, the second engagement section and the first engagement section corresponding to each other and connectable with and disengageable from each other through rotation of the rotatable joint, the valve connection section adapted to connect with a pneumatic valve of an inflatable object for supplying the fluid from the fluid source into and inflating the inflatable object, the rotatable joint being rotatable in a reversed direction to efficiently separating the fast-releasable gas source connector from the valve coupler.

2. The pneumatic valve adaptor as claimed in Claim **1,** wherein the top source piece of the fast-releasable gas source connector has a top end that forms a gas inlet opening for connection with a supply tube connector of the fluid source that supplies a tire sealant so as to receive the supply of the fluid of the tire sealant.

3. The pneumatic valve adaptor as claimed in Claim **2,** wherein the top source piece of the fast-releasable gas source connector has a lower end in which at least two through holes are formed and in communication with the gas inlet opening formed in the top end of the top source piece.

4. The pneumatic valve adaptor as claimed in Claim **1,** wherein the top source piece of the fast-releasable gas source connector has a lower end to which a push pin is mounted.

5. The pneumatic valve adaptor as claimed in Claim **1,** wherein the rotatable joint of the fast-releasable gas source connector has a top end in which a receiving recess is formed for receiving a lower end of the top source piece to fit therein and connect therewith.

6. The pneumatic valve adaptor as claimed in Claim **1,** wherein the rotatable joint of the fast-releasable gas source connector has a top end in which a receiving recess is formed for receiving at least one seal ring to dispose therein.

7. The pneumatic valve adaptor as claimed in Claim **1,** wherein the top source piece of the fast-releasable gas source connector has a lower circumference along which a guide slope surface is formed.

8. The pneumatic valve adaptor as claimed in Claim **1,** wherein the first engagement section of the rotatable joint of the fast-releasable gas source connector comprises an L-shaped slot and the second engagement section of the valve coupler comprises a raised block that is receivable in and movable along the L-shaped slot.

9. The pneumatic valve adaptor as claimed in Claim **1,** wherein the valve connection section of the valve coupler comprises threading corresponding to and engageable with an external thread of an American valve and the pneumatic valve of the inflatable object to which the valve connection section is connectable is an American valve.

10. The pneumatic valve adaptor as claimed in Claim **1,** wherein the valve connection section of the valve coupler comprises internal threading corresponding to and engageable with an external thread of a French valve and the pneumatic valve of the inflatable object to which the valve connection section is connectable is a French valve.

11. The pneumatic valve adaptor as claimed in Claim **1,** wherein the valve connection section of the valve coupler comprises an internal thread that corresponds to an external thread of an American valve, the internal thread being connectable with an extender, which comprises an internal locking thread formed therein, the internal locking thread corresponding to and engageable with an external thread of a French valve.
